# EUROPÄISCHE PATENTSCHRIFT

(11) **EP 1 000 817 B1**
(45) Veröffentlichungstag und Bekanntmachung des Hinweises auf die Patenterteilung: **31.03.2004**
(21) Anmeldenummer: 99120150.0
(22) Anmeldetag: 08.10.1999
(51) Int. Cl.: B60R 21/26

(54) **Vorrichtung zum Aufblasen einer Fahrzeuginsassen-Rückhaltevorrichtung**
Device for inflating a vehicle occupant restraint device
Dispositif pour gonfler un dispositif de retenue d'un occupant de véhicule

(30) Priorität: 13.11.1998 DE 19852558
(43) Veröffentlichungstag der Anmeldung: 17.05.2000
(73) Patentinhaber: Autoflator AB, 447 21 Vargarda (SE)
(72) Erfinder: Karlin, Mats, 447 33 Vargarda (SE)
(74) Vertreter: Laufhütte, Dieter, Dr.-Ing.

(56) Entgegenhaltungen:
- EP-A- 0 604 001
- GB-A- 1 302 805
- US-A- 3 774 807
- US-A- 3 948 540
- US-A- 3 966 226
- US-A- 4 018 457

## Beschreibung

Die vorliegende Erfindung betrifft eine Vorrichtung zum Aufblasen einer Fahrzeuginsassen-Rückhaltevorrichtung mit einem ein unter Druck stehendes Gas enthaltenden Druckbehältnis, dessen Innenraum mit einer durch ein zerstörbares Verschlußelement verschlossenen Öffnung in Verbindung steht, mit einem Abstützelement, das eine Bohrung aufweist, die bei der Aktivierung der Vorrichtung mit Druck beaufschlagt wird, und das derart angeordnet ist, daß es relativ zum Verschlußelement derart bewegbar ist, daß das Verschlußelement zerstört oder geöffnet wird, sowie mit Mitteln zur Bewegung des Abstützelementes.

Fahrzeuginsassen-Rückhaltevorrichtungen dienen dazu, die Insassen bei einem Unfall dadurch zu schützen, daß in Sekundenbruchteilen nach ,dem Aufprall die Rückhaltevorrichtung (Airbag) aufgeblasen wird, wodurch das Verletzungsrisiko der Insassen erheblich vermindert wird. Es sind unterschiedlich ausgeführte Vorrichtungen zum Aufblasen derartiger Rückhaltevorrichtungen bekannt, die sich beispielsweise darin unterscheiden, auf welche Weise das zum Aufblasen benötigte Gas erzeugt bzw. in die Rückhaltevorrichtung eingeleitet wird. Aus der DE-OS 44 44 319 ist eine Aufblasanordnung bekannt, bei der das Druckbehältnis eine durch ein zerstörbares Verschlußelement verschlossene Öffnung aufweist, die im Bedarfsfall durch ein Projektil durchschlagen wird. Das Projektil befindet sich in einer an das Verschlußelement grenzenden Kammer und wird hier durch eine Zündladung aktiviert, d.h. durch das Verschlußelement in das Druckbehältnis eingeschossen. Das in dem Druckbehältnis befindliche, brennbare Gas wird nach dem Durchtrennen des Verschlußelementes durch eine Zündladung des eindringenden Projektils entzündet. Die Brenngase strömen anschließend durch die entsprechend erzeugte Öffnung in die Rückhaltevorrichtung. Ein Nachteil einer derartigen Vorrichtung besteht darin, daß das Projektil aufgrund seiner hohen Geschwindigkeit nach dem Durchtrennen des Verschlußelementes die gegenüberliegende Wandung des Druckbehältnisses beschädigen kann. Eine hohe Geschwindigkeit des Projektils ist jedoch erforderlich, um das stabile Verschlußelement, das dem im Druckbehältnis herrschenden Gasdruck standhalten muß, zu durchschlagen.

Um den Einsatz dünnerer bzw. weniger stabiler Verschlußelemente zu ermöglichen, wird in der GB 2 302 169 vorgeschlagen, das Verschlußelement durch ein Abstützelement zu unterstützen, d.h. der Druck des im Druckbehältnis befindlichen Gases wird wenigstens teilweise durch das Abstützelement aufgefangen. Diese Anordnung ermöglicht es, das Verschlußelement dünner und damit im Bedarfsfall leichter durchtrennbar auszuführen. Gemäß der Lehre der GB 2 302 169 wird das Durchtrennen des Verschlußelementes durch das Abstützelement selbst bewirkt. Nach dem Zünden einer Zündladung wird das Abstützelement in einer Ebene bewegt, die sich parallel zu der durch das Verschlußelement definierten Ebene erstreckt. Das Öffnen bzw. Durchtrennen des Verschlußelementes wird dadurch bewirkt, daß das Abstützelement eine Schnittkante aufweist, die bei Bewegung des Abstützelementes das Verschlußelement aufschneidet. Bei einer derartigen Anordnung ist es nachteilig, daß die Möglichkeit besteht, daß das Verschlußelement bei Bewegung des Abstützelementes nicht aufgeschnitten, sondern nach innen, d.h. in Richtung des Innenraumes des Druckbehältnisses verdrängt wird und damit der Schnittkante des Abstützelementes ausweicht. Daraus ergibt sich, daß eine derartige Aufblasanordnung nicht immer zuverlässig arbeitet, was im Falle eines Unfalls entsprechende Konsequenzen für die Fahrzeuginsassen hätte.

Die DE-OS 23 05 908 offenbart eine gattungsgemäße Aufblasvorrichtung, bei der das Abstützelement bei Aktivierung der Vorrichtung, d.h. bei Zünden einer Treibladung, senkrecht zum Verschlußelement bewegt wird, wodurch das oben beschriebene Ausweichen des Verschlußelementes verhindert wird. Das in der DE-OS 23 05 908 offenbarte Abstützelement weist eine Bohrung auf, die mit der Zündkammer der Aufblasvorrichtung in Verbindung steht und die sich bis zu dem an das Abstützelement angrenzenden Verschlußelement erstreckt. Das Abstützelement liegt stimseitig an dem Verschlußelement an und bewirkt bei Zünden der Treibladung dessen Öffnung bzw. Zerstörung. Einer derartigen Vorrichtung ist es nachteilig, daß aufgrund der in dem Abstützelement angeordneten Bohrung nur eine relativ geringe Abstützfläche für das Verschlußelement zu Verfügung steht und somit eine gleichmäßige Verteilung der durch das Abstützelement auf das Verschlußelement wirkenden Kraft nicht möglich ist. Vielmehr ergibt sich eine nur partielle Abstützung, was dazu führt, daß das Verschlußelement entsprechend stabil ausgeführt werden muß. Werden dünne und damit instabile Verschlußelemente verwendet, ergibt sich die Gefahr einer Beschädigung oder gar Öffnung des Verschlußelementes vor Aktivierung der Vorrichtung, was die Zuverlässigkeit bzw. Wirksamkeit der Vorrichtung entsprechend beeinträchtigt.

Es ist die Aufgabe der vorliegenden Erfindung eine gattungsgemäße Vorrichtung zum Aufblasen einer Fahrzeuginsassen-Rückhaltevorrichtung dahingehend weiterzubilden, daß diese stets zuverlässig arbeitet.

Diese Aufgabe wird ausgehend von einer Vorrichtung gemäß dem Oberbegriff des Anspruchs 1 dadurch gelöst, daß das Abstützelement einen lösbaren Aufsatz umfaßt, der die Bohrung an ihrer zu dem Verschlußelement gerichteten Seite verschließt und der im nicht aktivierten Zustand der Vorrichtung mit dem Verschlußelement in Berührung steht. Der lösbare Aufsatz dient im nicht aktivierten Zustand der Vorrichtung als Abstützfläche zum Abstützen des Verschlußelementes gegen den im Druckbehältnis vorliegenden Gasdruck und bietet eine gleichmäßige und bei entsprechender Ausführung weiche Oberfläche. Hierdurch wird wirksam verhindert, daß das Verschlußelement bereits vor Benutzung der Vorrichtung beschädigt wird und somit möglicherweise Leckagen entstehen. Nach Durchtrennen des Verschlußelementes durch das bei der Aktivierung der Vorrichtung bewegte Abstütz-element löst sich durch den in der Bohrung des Abstützelementes vorliegenden Druck der Aufsatz vom Abstützelement.

Ein weiterer Vorteil des erfindungsgemäßen Aufsatzes liegt darin, daß die Bohrung des Abstützelementes durch den Aufsatz verschlossen wird. Hierdurch wird verhindert, daß beispielsweise durch die Zündung einer Treibladung entstandenes Gas zwischen dem Abstützelement und dem Verschlußelement entweicht und der Bewegung des Abstützelementes entgegenwirkt. Der lösbare Aufsatz bewirkt, daß das Austreten von bei der Zündung entstandenem Gas aus der Bohrung erst dann erfolgt, wenn das Verschlußelement durchtrennt ist.

Die Mittel zur Bewegung des Abstützelementes können eine Zündkammer sowie eine darin angeordnete Zündvorrichtung umfassen. Wird die Zündvorrichtung bei einem Aufprall des Fahrzeuges aktiviert, d.h. eine Zündladung gezündet, wird durch die damit einhergehende Druckerhöhung unmittelbar oder mittelbar auf das Abstützelement eine Kraft ausgeübt, die zur Bewegung des Abstützelementes und damit zur Öffnung oder Zerstörung des Verschlußelementes führt. In der Zündkammer können sich brennbare Gase befinden, die bei Aktivierung der Zündvorrichtung entzündet werden.

Gemäß einer bevorzugten Ausgestaltung der vorliegenden Erfindung ist das Abstützelement als sich axial erstreckender Ansatz eines Kolbens ausgeführt ist, der in einem Zylinder bewegbar aufgenommen ist. Werden als Mittel zur Krafteinleitung eine Zündkammer mit Zündvorrichtung verwendet, ist der Kolben derart angeordnet, daß dieser und damit auch das Abstützelement bei Zündung auf das Verschlußelement zu bewegt wird und das Verschlußelement öffnet.

Der Aufsatz und der Kolben können den selben Durchmesser aufweisen. In diesem Falle weist ein Ende des Kolbens den lösbaren Aufsatz auf, während das andere Ende des Kolbens mit der Zündkammer in Verbindung steht.

Gemäß einer bevorzugten Ausgestaltung der vorliegenden Erfindung ist ein Rückhaltemittel vorgesehen, durch das die Bewegung des Abstützelementes begrenzbar ist. Das Rückhaltemittel ist derart angeordnet, daß die Bewegung des Abstützelementes nach dem Durchtrennen des Verschlußelementes begrenzt wird. Daraus ergibt sich der Vorteil, daß eine Beschädigung des Druckbehältnisses durch das in diesen eindringende Abstützelement nicht möglich ist.

Das Rückhaltemittel kann durch eine sich von der Innenseite der Zylinderwandung erstreckende im wesentlichen quer zur Bewegungsrichtung des Kolbens angeordnete Wandung gebildet werden.

In weiterer Ausgestaltung der vorliegenden Erfindung ist vorgesehen, daß die Zylinderwandung eine oder mehrere Öffnungen aufweist, die derart angeordnet sind, daß das in der Zündkammer befindliche Gas nach der Bewegung des Abstützelementes aus dem Zylinderraum entweichen kann. Dabei sind die Öffnungen derart angeordnet, daß diese vor dem Zünden durch das Abstützelement bzw. durch den Kolben abgedeckt sind.

Besonders vorteilhaft ist es, wenn das Abstützelement als Hohlzylinder ausgeführt ist, dessen Bohrung mit der Zündkammer in Verbindung steht. Dadurch wird erreicht, daß beim Zündvorgang das in der Zündkammer befindliche Gas in den Hohlraum des Abstützelementes einströmt und nach dem Durchstoßen des Verschlußelementes in das Druckbehältnis eindringt. Hier wird es mit dem darin befindlichen komprimierten Gas gemischt. Aufgrund der Tatsache, daß das heiße, bei der Zündung entstandene Gas in das Druckbehältnis geführt wird, bevor es zur Rückhaltevorrichtung (Airbag) gelangt, ergibt sich eine bessere Mischung des heißen Gases mit dem kalten komprimierten Gas.

Besonders vorteilhaft ist es, wenn das Verschlußelement als Folie ausgeführt ist. Die Verwendung einer Folie als Verschlußelement bringt den Vorteil mit sich, daß diese besonders leicht und zuverlässig zu durchtrennen ist.

Die Zündkammer sowie das Abstützelement können in einem an den Druckbehälter angrenzenden Gehäuse aufgenommen sein, wobei das Gehäuse mit Filtern versehene Öffnungen aufweist, durch die das Gas in die Rückhaltevorrichtung entweicht.

Weitere Einzelheiten und Vorteile der vorliegenden Erfindung werden anhand eines in der Zeichnung dargestellten Ausführungsbeispiels näher erläutert. Es zeigen:
- Fig. 1:: eine Längsschnittdarstellung der erfindungsgemäßen Vorrichtung mit als Hohlzylinder ausgeführtem Abstützelement mit lösbarem Aufsatz vor der Zündung,
- Fig. 2:: eine Längsschnittdarstellung der Vorrichtung gemäß Fig. 1 nach der Zündung und nach dem Durchtrennen des Verschlußelementes,
- Fig. 3:: eine Längsschnittdarstellung der Vorrichtung gemäß Fig. 1 nach dem Eindringen des Abstützelementes in das Druckbehältnis und
- Fig. 4:: eine Längsschnittdarstellung der Vorrichtung gemäß Fig. 1 in einer Endposition des Abstützelementes nach Lösen des Aufsatzes.

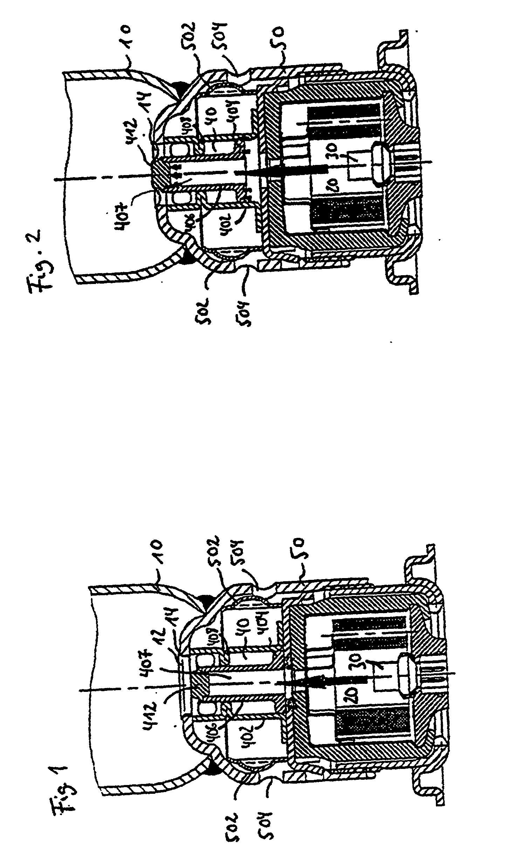

Fig. 1 zeigt in einer Längsschnittdarstellung das Druckbehältnis 10, in dem ein unter Druck stehendes Gas aufgenommen ist. Der Innenraum des Druckbehältnisses 10 steht mit der durch das zerstörbare Verschlußelement 12 verschlossenen Öffnung 14 in Verbindung. Das zerstörbare Verschlußelement 12 ist als Folie ausgebildet.

Unmittelbar unterhalb des Verschlußelementes 12 befindet sich das Abstützelement 40, das als sich axial von dem Kolben 404 erstreckender Ansatz 406 ausgebildet ist. Der Kolben 404 wird in dem Zylinder 402 geführt.

Das Abstützelement 40 stützt das Verschlußelement 12 auf der Unterseite gegen den im Druckbehältnis 10 herrschenden Innendruck ab, wodurch das Verschlußelement 12 verhältnismäßig dünn ausgeführt werden kann. Von der Innenseite der Zylinderwandung des Zylinders 402 erstreckt sich quer zur Bewegungsrichtung des Kolbens 404 die Wandung 408, die die Bewegung des Kolbens 404 axial begrenzt.

In der Zündkammer 20 ist die Zündvorrichtung 30 angeordnet, die im Falle eines Aufpralles gezündet wird. Wie aus Fig. 1 ersichtlich grenzt die Zündkammer 20 an die Unterseite des Kolbens 404 an.

Die Zündkammer 20 sowie das Abstützelement 40 sind in einem an den Druckbehälter 10 angrenzenden Gehäuse 50 aufgenommen. Das Gehäuse weist mit Filtern 502 versehene Öffnungen 504 auf, durch die nach Aktivierung der erfindungsgemäßen Vorrichtung die Gasmischung in die Rückhaltevorrichtung (Airbag) entweicht.

Wie aus Fig. 1 weiter ersichtlich ist, ist das Abstützelement 40 als Hohlzylinder ausgeführt, dessen Bohrung 407 mit der Zündkammer 20 in Verbindung steht. Der Hohlzylinder ist in seinem zu dem Verschlußelement 12 gerichteten Ende durch den lösbaren Aufsatz 412 verschlossen. Dieser grenzt unmittelbar an das Verschlußelement 12 an und übt die gewünschte Abstützwirkung aus. Fig. 1 zeigt, daß unmittelbar nach dem Zündvorgang die heißen Brenngase aus der Zündkammer 20 in die Bohrung 407 eindringen, wie dies durch den Pfeil angedeutet ist Durch den entsprechenden im Hohlzylinder herrschenden Druck wird dieser nun axial bewegt, wodurch auch die Unterseite des Kolbens 404 von der Auflage entfernt wird und ebenfalls zur Krafteinleitung auf die Abstützvorrichtung 40 dient.

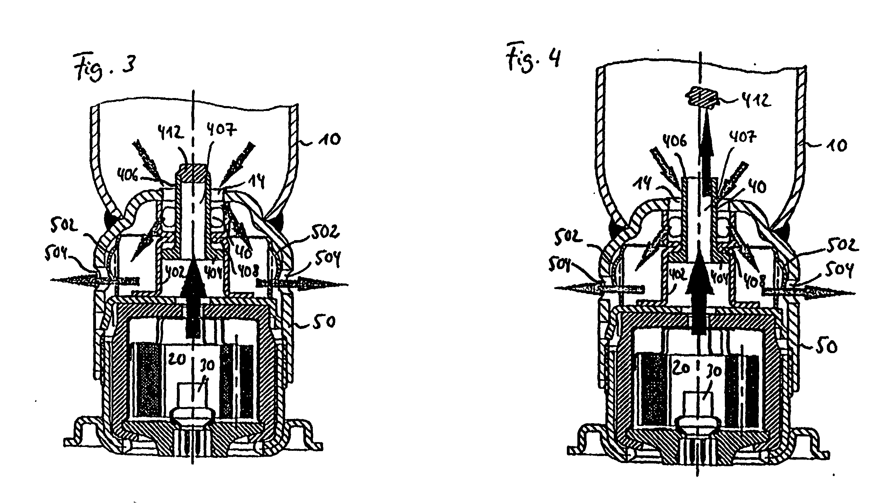

Wie aus Fig. 2 ersichtlich, durchtrennt der lösbare Aufsatz 412 des Abstützelementes 40 das Verschlußelement 12 und dringt gemäß Fig. 3 in den Raum des Druckbehältnisses 10 ein. Da der lösbare Aufsatz 412 noch auf dem Hohlzylinder aufgesetzt ist, kommt es noch nicht zu einer Durchmischung des kalten Gases mit dem heißen, bei der Zündung entstandenen Gas. Das heiße Gas bewegt sich aus der Zündkammer 20 in den Hohlzylinder, wie dies durch den dicken senkrecht stehenden Pfeil in Fig. 3 dargestellt ist. Die übrigen Pfeile kennzeichnen die Bewegung des kalten komprimierten Gases aus dem Druckbehältnis 10 durch die Öffnung 14 und die Öffnung 504 in die Rückhaltevorrichtung.

Fig. 4 zeigt den Zustand der erfindungsgemäßen Vorrichtung, bei dem der Kolben 404 seine Endposition erreicht hat. Der Kolben 404 liegt nunmehr an der Wandung 408 an. Gemäß Fig. 4 hat das heiße, durch die zwei senkrecht nach oben weisenden Pfeile gekennzeichnete Gas den lösbaren Aufsatz 412 von dem Hohlzylinder abgetrennt, und strömt in das Druckbehältnis 10 ein. Es wird hier mit dem kalten komprimierten Gas gemischt und verläßt, wie dies durch die weiteren Pfeile in Fig. 4 dargestellt wird, das Druckbehältnis 10 in der Mischung mit kaltem komprimierten Gas.

## Patentansprüche

1. Vorrichtung zum Aufblasen einer Fahrzeuginsassen-Rückhaltevorrichtung
mit einem ein unter Druck stehendes Gas enthaltenden Druckbehältnis (10), dessen Innenraum mit einer durch ein zerstörbares Verschlußelement (12) verschlossenen Öffnung (14) in Verbindung steht,
mit einem Abstützelement (40), das eine Bohrung (407) aufweist, die bei der Aktivierung der Vorrichtung mit Druck beaufschlagt wird, und das derart angeordnet ist, daß es relativ zum Verschlußelement (12) derart bewegbar ist, daß das Verschlußelement (12) zerstört oder geöffnet wird, ,
sowie mit Mitteln zur Bewegung des Abstützelementes (40),
wobei die Bohrung und die Bewegungsrichtung des Abstützelements senkrecht zur Öffnungsebene ausgerichtet sind,
**dadurch gekennzeichnet,**
**daß** das Abstützelement (40) einen lösbaren Aufsatz (412) umfaßt, der die Bohrung (407) an ihrer zu dem Verschlußelement (12) gerichteten Seite verschließt und der im nicht aktivierten Zustand der Vorrichtung mit dem Verschlußelement (12) in Berührung steht.

2. Vorrichtung nach Anspruch 1, **dadurch gekennzeichnet, daß** die Mittel zur Bewegung des Abstützelementes (40) eine Zündkammer (20) sowie eine darin angeordnete Zündvorrichtung (30) umfassen.

3. Vorrichtung nach Anspruch 1 oder 2, **dadurch gekennzeichnet, daß** das Abstützelement (40) als sich axial erstreckender Ansatz (406) eines Kolbens (404) ausgeführt ist, der in einem Zylinder (402) bewegbar aufgenommen ist.

4. Vorrichtung nach Anspruch 3, **dadurch gekennzeichnet, daß** der Ansatz (406) und der Kolben (404) denselben Durchmesser aufweisen.

5. Vorrichtung nach einem oder mehreren der Ansprüche 1 bis 4, **dadurch gekennzeichnet, daß** ein Rückhaltemittel vorgesehen ist, durch das die Bewegung des Abstützelementes (40) begrenzbar ist.

6. Vorrichtung nach Anspruch 5, **dadurch gekennzeichnet, daß** das Rückhaltemittel durch eine sich von der Innenseite der Zylinderwandung erstreckende im wesentlichen quer zur Bewegungsrichtung des Kolbens (404) angeordnete Wandung (408) gebildet wird.

7. Vorrichtung nach einem oder mehreren der Ansprüche 3 bis 6, **dadurch gekennzeichnet, daß** die Zylinderwandung eine oder mehrere Öffnungen aufweist, die derart angeordnet sind, daß das in der Zündkammer (20) befindliche Gas nach der Bewegung des Abstützelementes (40) aus dem Zylinderraum entweichen kann.

8. Vorrichtung nach einem oder mehreren der Ansprüche 2 bis 7, **dadurch gekennzeichnet, daß** das Abstützelement (40) als Hohlzylinder ausgeführt ist, dessen Bohrung (407) mit der Zündkammer (20) in Verbindung steht.

9. Vorrichtung nach einem oder mehreren der Ansprüche 1 bis 8, **dadurch gekennzeichnet, daß** das Verschlußelement (12) als Folie ausgeführt ist.

10. Vorrichtung nach einem oder mehreren der Ansprüche 2 bis 9, **dadurch gekennzeichnet, daß** die Zündkammer (20) sowie das Abstützelement (40) in einem an den Druckbehälter (10) angrenzenden Gehäuse (50) aufgenommen sind, wobei das Gehäuse (50) mit Filtem (502) versehene Öffnungen (504) aufweist, durch die das Gas in die Rückhaltevorrichtung entweicht.

## Claims

1. Device for inflating a vehicle-occupant restraint device
having a pressure vessel (10) which contains a pressurized gas and the interior of which is connected to an opening (14) which is closed by a destructible closure element (12),
having a supporting element (40) which has a hole (407), which is acted upon by pressure when the device is activated, and which is arranged in such a manner that it can be moved relative to the closure element (12) in such a manner that the closure element (12) is destroyed or opened,
and having means for moving the supporting element (40) ,
the hole and the direction of movement of the supporting element being orientated perpendicular with respect to the plane of the opening,
**characterized**
**in that** the supporting element (40) comprises a releasable attachment (412) which closes the hole (407) on its side directed towards the closure element (12) and which is in contact with the closure element (12) in the non-activated state of the device.

2. Device according to Claim 1, **characterized in that** the means for moving the supporting element (40) comprise an ignition chamber (20) and an ignition device (30) arranged therein.

3. Device according to Claim 1 or 2, **characterized in that** the supporting element (40) is designed as an axially extending projection (406) of a piston (404) which is held moveably in a cylinder (402).

4. Device according to Claim 3, **characterized in that** the projection (406) and the piston (404) have the same diameter.

5. Device according to one or more of Claims 1 to 4, **characterized in that** a restraint means which is able to limit the movement of the supporting element (40) is provided.

6. Device according to Claim 5, **characterized in that** the restraint means is formed by a wall (408) which extends from the inside of the cylinder wall and is arranged essentially transversely with respect to the direction of movement of the piston (404).

7. Device according to one or more of Claims 3 to 6, **characterized in that** the cylinder wall has one or more openings which are arranged in such a manner that the gas situated in the ignition chamber (20) can escape after the supporting element (40) moves out of the cylinder space.

8. Device according to one or more of Claims 2 to 7, **characterized in that** the supporting element (40) is designed as a hollow cylinder whose hole (407) is connected to the ignition chamber (20).

9. Device according to one or more of Claims 1 to 8, **characterized in that** the closure element (12) is designed as a film.

10. Device according to one or more of Claims 2 to 9, **characterized in that** the ignition chamber (20) and the supporting element (40) are held in a housing (50) adjacent to the pressure container (10), the housing (50) having openings (504) which are provided with filters (502) and through which the gas escapes into the restraint device.

## Revendications

1. Dispositif pour gonfler un dispositif de retenue des occupants d'un véhicule
avec un réservoir sous pression (10) contenant du gaz comprimé, dont l'espace intérieur est en communication avec un orifice (14) obturé par un élément de fermeture (12) destructible,
avec un support (40) qui comprend un alésage (407) qui est alimenté en pression lors de l'activation du dispositif, et qui est disposé de telle sorte qu'il soit déplaçable par rapport à l'élément de fermeture (12) de manière à ce que l'élément de fermeture (12) soit détruit ou ouvert,
ainsi qu'avec des moyens de déplacement du support (40), l'alésage et le sens du mouvement du support étant orientés verticalement par rapport au plan de l'orifice,
**caractérisé en ce que**,
le support (40) comprend une garniture détachable (412) qui obture l'alésage (407) sur son côté tourné vers l'élément de fermeture (12) et qui est en contact, à l'état non activé du dispositif, avec l'élément de fermeture (12).

2. Dispositif selon la revendication 1, **caractérisé en ce que** les moyens de déplacement du support (40) comprennent une chambre d'allumage (20) ainsi qu'un dispositif d'allumage (30) disposé à l'intérieur.

3. Dispositif selon la revendication 1 ou 2, **caractérisé en ce que** le support (40) est réalisé en tant qu'épaulement (406), s'étendant de manière axiale, d'un piston (404) qui est logé de manière mobile dans un cylindre (402).

4. Dispositif selon la revendication 3, **caractérisé en ce que** l'épaulement (406) et le piston (404) présentent le même diamètre.

5. Dispositif selon une ou plusieurs des revendications 1 à 4, **caractérisé en ce qu'**on a prévu un moyen de retenue par le biais duquel il est possible de limiter le mouvement du support (40).

6. Dispositif selon la revendication 5, **caractérisé en ce que** le moyen de retenue est formé d'une paroi (408) s'étendant à partir de la face interne de la paroi du cylindre, disposée essentiellement de manière transversale par rapport au sens du mouvement du piston (404).

7. Dispositif selon une ou plusieurs des revendications 3 à 6, **caractérisé en ce que** la paroi du cylindre comprend un ou plusieurs orifices qui sont disposés de telle sorte que le gaz se trouvant dans la chambre d'allumage (20) puisse s'échapper hors de la chambre du cylindre, après le mouvement du support (40).

8. Dispositif selon une ou plusieurs des revendications 2 à 7, **caractérisé en ce que** le support (40) est réalisé en tant que cylindre creux dont l'alésage (407) est en communication avec la chambre d'allumage (20).

9. Dispositif selon une ou plusieurs des revendications 1 à 8, **caractérisé en ce que** l'élément de fermeture (12) est réalisé en tant que film.

10. Dispositif selon une ou plusieurs des revendications 2 à 9, **caractérisé en ce que** la chambre d'allumage (20) ainsi que le support (40) sont logés dans un boîtier (50) adjacent au réservoir de pression (10), le boîtier (50) présentant des orifices (504) munis de filtres (502), orifices à travers lesquels le gaz s'échappe pour rejoindre le dispositif de retenue.
